Europäisches Patentamt

European Patent Office

Office européen des brevets

(11) Veröffentlichungsnummer: **0 210 433**
A2

# EUROPÄISCHE PATENTANMELDUNG

(21) Anmeldenummer: 86108562.9

(22) Anmeldetag: 24.06.86

(51) Int. Cl.⁴: **B 60 N 1/00**

(30) Priorität: 30.07.85 DE 3527246

(43) Veröffentlichungstag der Anmeldung:
04.02.87 Patentblatt 87/6

(84) Benannte Vertragsstaaten:
DE FR GB IT NL SE

(71) Anmelder: Adam Opel Aktiengesellschaft
Bahnhofsplatz 1 Postfach 1560
D-6090 Rüsselsheim(DE)

(72) Erfinder: Stenz, Karl, Dipl.-Ing. (FH)
Am Langelsweinberg 4
D-6200 Wiesbaden(DE)

(72) Erfinder: Baltes, Horst, Dipl.-Ing. (FH)
Eddersheimer Strasse 36
D-6093 Flörsheim(DE)

(74) Vertreter: Elbert, Karl, Dipl.-Ing. et al,
Adam Opel AG Bahnhofsplatz 1 Postfach 1560
D-6090 Rüsselsheim(DE)

(54) Vorrichtung zum lösbaren Verbinden eines Sitzteiles mit dem Fahrzeugaufbau.

(57) Bei einem Sitzteil (1) ist der Drahtrahmen (2) an zwei Stellen nach unten hin U-förmig abgebogen. Auf diesen U-förmigen Abschnitten (5) sitzt jeweils ein aus zwei Rastkörper-Halbschalen (8, 9) gebildeter Rastkörper (6), der einen mittels eines Zuggliedes (12) zu betätigenden Riegel (11) aufweist.

Zur Verrastung des Sitzteiles greift dieses mit seinen Rastkörpern (6) in einfache Öffnungen (14, 15) im Fahrzeugunterbau (7).

Fig.1

Fig. 2

Fig.3

EP 0 210 433 A2

19. Juni 1986

- 1 -

8238 A - Rfd/kh

Anmelderin:

Adam Opel Aktiengesellschaft          6090 Rüsselsheim

## Vorrichtung zum lösbaren Verbinden eines Sitzteiles mit dem Fahrzeugaufbau

Die Erfindung bezieht sich auf eine Vorrichtung zum lösbaren Verbinden eines Sitzteiles mit dem Fahrzeugaufbau, bei der am Sitzteil ein Rastkörper und am Fahrzeugaufbau ein den Rastkörper aufnehmendes Aufnahmeteil vorgesehen ist und welche ein Zugglied mit einem Handgriff zum Lösen eines den Rastkörper im Aufnahmeteil sperrenden Riegels hat. Eine solche Vorrichtung ist in der DE-PS 31 17 643 beschrieben.

Vorrichtungen dieser Art dienen meist dazu, ein Sitzteil eines Hintersitzes mit dem Unterbau des Fahrzeugs lösbar zu verbinden, damit das Sitzteil ohne Werkzeug rasch aus dem Fahrzeug entfernt werden kann. Natürlich können solche Vorrichtungen auch bei wegklappbaren Sitzteilen oder Hintersitz-Rückenteilen vorgesehen werden, um diese in ihrer Normalposition zu sichern.

Bei der bekannten Vorrichtung nach der DE-PS 31 17 643 ist der Rastkörper ein stangenartiger Abschnitt des Drahtrahmens des Hintersitzes. Bei dem Aufnahmeteil handelt es sich um ein aufwendiges, am Fahrzeugunterbau befestigtes Schloß, welches einen in Verriegelungsstellung über den Abschnitt des Drahtrahmens greifenden Riegel hat, der mittels eines Zuggliedes in eine Freigabestel-

...

- 2 -

lung bewegbar ist. Ein solches Aufnahmeteil ist in der Herstellung teuer, da es aus mehreren Bauteilen besteht, die einzeln zu fertigen sind und anschließend montiert werden müssen. Zusätzlich ist es erforderlich, vor dem Einbau des Hintersitzes das Aufnahmeteil am Fahrzeugunterbau festzuschrauben.

Der Erfindung liegt die Aufgabe zugrunde, eine Vorrichtung der eingangs genannten Art derart zu gestalten, daß sie möglichst kostengünstig herstellbar und auf einfache Weise mit geringem Aufwand montierbar ist.

Diese Aufgabe wird erfindungsgemäß dadurch gelöst, daß der Rastkörper den Riegel mit dem Zugglied und dem Handgriff aufweist und daß das Aufnahmeteil eine einfache Öffnung im Fahrzeugunterbau oder Fahrzeugaufbau ist.

Durch diese Gestaltung vereinfacht sich der Aufbau der Vorrichtung. Insbesondere ist ihre Montage mit weniger Aufwand durchführbar. Vorteilhaft ist es für die Montage vor allem, daß der Rastkörper schon vor der Endmontage mit dem Sitzteil verbunden werden kann. Am Montageband braucht dann der Sitzteil nur noch mit seinen Rastkörpern in die Aufnahmeteile des Fahrzeugunterbaus eingesetzt zu werden, so daß dort beim Einbau des Sitzteiles keinerlei Verschraubungsarbeiten erforderlich werden. Da die Aufnahmeteile einfache Löcher im Fahrzeugunterbau sind, bereitet ihre Herstellung nur äußerst geringe Kosten. Vorteilhaft ist es auch, daß dank der Erfindung nach dem Ausbau eines Sitzteiles mit der erfindungsgemäßen Vorrichtung aus dem Fahrzeugunterbau keine Teile zum Befestigen des Sitzteiles nach oben ragen, die im Fahrzeug zu transportierende Teile beschädigen oder selbst durch solche Teile Schaden nehmen könnten.

...

- 3 -

Besonders einfach gestaltet sich der Rastkörper, wenn er aus zwei aufeinandersitzenden, einen U-förmig abgebogenen Abschnitt des Drahtrahmens einschließenden Rastkörper-Halbschalen besteht.

Die Rastkörper-Halbschalen können auf einfache Weise von zwei Seiten her über den U-förmigen Abschnitt des Drahtrahmens geschoben werden, wenn in mindestens einer Rastkörper-Halbschale eine U-förmige, nach oben offene Nut zur Aufnahme des abgebogenen Abschnittes des Drahtrahmens vorgesehen ist. Durch diese Nut wird sichergestellt, daß nach dem Verbinden der beiden Halbschalen miteinander, der Rastkörper fest mit dem Sitzteil verbunden ist.

Eine Rastkörper-Halbschale vermag sich schon allein am U-förmigen Abschnitt des Drahtrahmens zu halten, wenn gemäß einer anderen Ausgestaltung der Erfindung eine Rastkörper-Halbschale an ihrer Oberseite einen Durchlaß zum Einschieben des U-förmigen Abschnittes des Drahtrahmens hat und nach unten hin zunehmend dicker wird, so daß die Nut zur Basis des U's zunehmend tiefer in die Seitenfläche der Rastkörper-Halbschale hinein verläuft, während die andere Rastkörper-Halbschale entsprechend nach unten hin keilförmig verjüngend ausgebildet ist. Diese Ausgestaltung erleichtert vor allem die Verbindung des Rastkörpers mit dem Drahtrahmen.

Ganz besonders rasch und ohne Werkzeug ist der Rastkörper zu montieren, wenn die Rastkörper-Halbschalen durch Klipse miteinander verbunden sind.

Der Aufwand für die Klipse ist besonders gering, wenn die eine Rastkörper-Halbschale mit zwei Rastfüßen an ihrer Unterseite in entsprechenden Öffnungen der anderen Rastkörper-Halbschale gehalten ist und an ihrer Oberseite zumindest eine Rastzunge hat, mit der sie in eine

...

- 4 -

Rastöffnung der anderen Rastkörper-Halbschale verrastbar ist. Diese Ausführungsform wird auch durch die keilförmige Ausbildung der beiden Rastkörper-Halbschalen begünstigt.

Auch der Riegel kann auf einfache Weise als ein mit einer Halbschale einstückiges Bauteil ausgebildet werden wenn er an der Unterseite an einer Rastkörper-Halbschale als nach oben weisende federnde Zunge ausgebildet ist und an seinem freien Ende das Zugglied aufweist.

Aufgrund von Fertigungstoleranzen ist der Abstand zwischen dem Rastkörper und der Rastkörperaufnahme nicht immer gleich. Solche Höhenunterschiede sind jedoch für die Verrastung des Sitzteiles ohne Bedeutung, wenn gemäß einer anderen, vorteilhaften Ausgestaltung der Erfindung am Riegel in unterschiedlichen Höhen mehrere Rastnasen zur Verrastung mit dem Aufahmeteil vorgesehen sind.

Der Riegel ist seitlich geführt und damit gegen ein seitliches Ausweichen gesichert, wenn die beiden Rastkörper-Halbschalen jeweils mit einer Wange seitlich über den Riegel greifen.

Der gesamte Rastkörper mit beiden Rastkörper-Halbschalen kann als ein einziges Bauteil ausgebildet werden, indem die Rastkörper-Halbschalen durch ein Filmscharnier miteinander verbunden sind. Dadurch sind bei der Montage die zusammengehörigen Rastkörper-Halbschalen zwangsläufig zusammengehalten.

Die Erfindung läßt zahlreiche Ausführungsformen zu. Zur weiteren Verdeutlichung ihres Grundprinzips ist eine davon in der Zeichnung dargestellt und wird nachfolgend beschrieben. Die Zeichnung zeigt in

...

- 5 -

Fig. 1 eine räumliche Ansicht eines Sitzteiles,
teilweise ohne Polsterung und Bezug dargestellt,

Fig. 2 eine räumliche Ansicht eines Rastkörpers zum
Verrasten des Sitzteiles mit dem Fahrzeugunterbau,

Fig. 3 eine räumliche Ansicht des Teilbereiches
eines Fahrzeugunterbaus, auf den das Sitzteil
anzuordnen ist,

Fig. 4 eine räumliche Ansicht des Rastkörpers nach

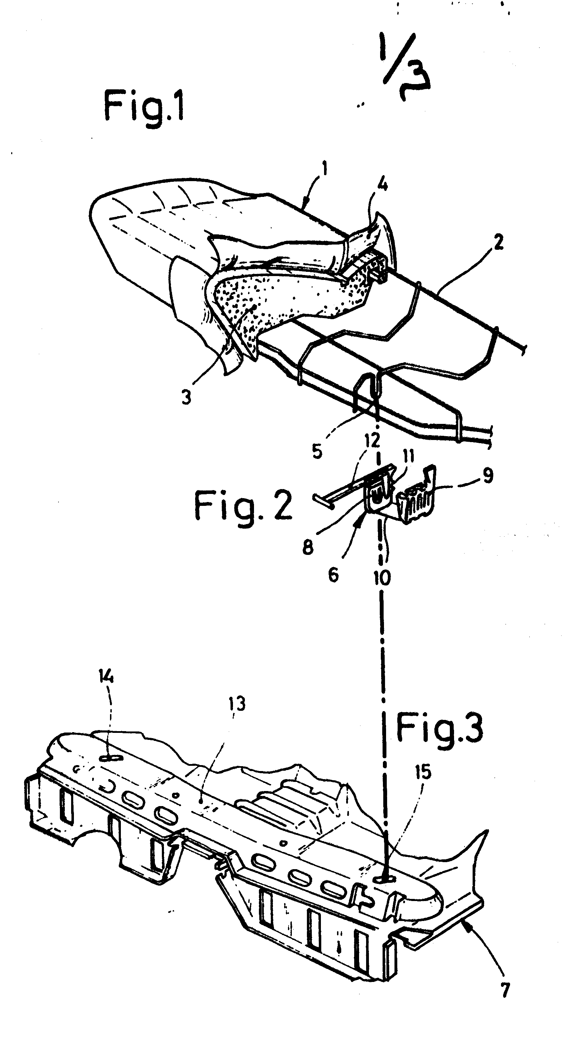

Figur 2 im vergrößerten Maßstab und geschlossenem Zustand,

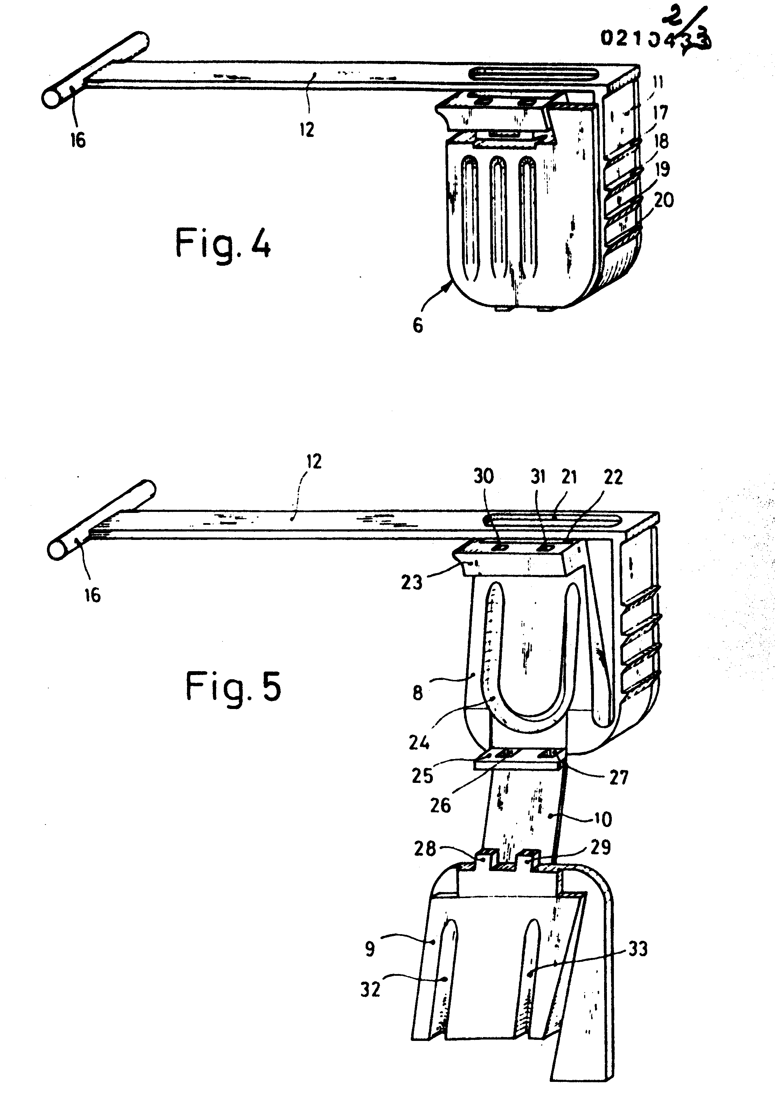

Fig. 5 eine räumliche Ansicht des Rastkörpers im
geöffneten Zustand,

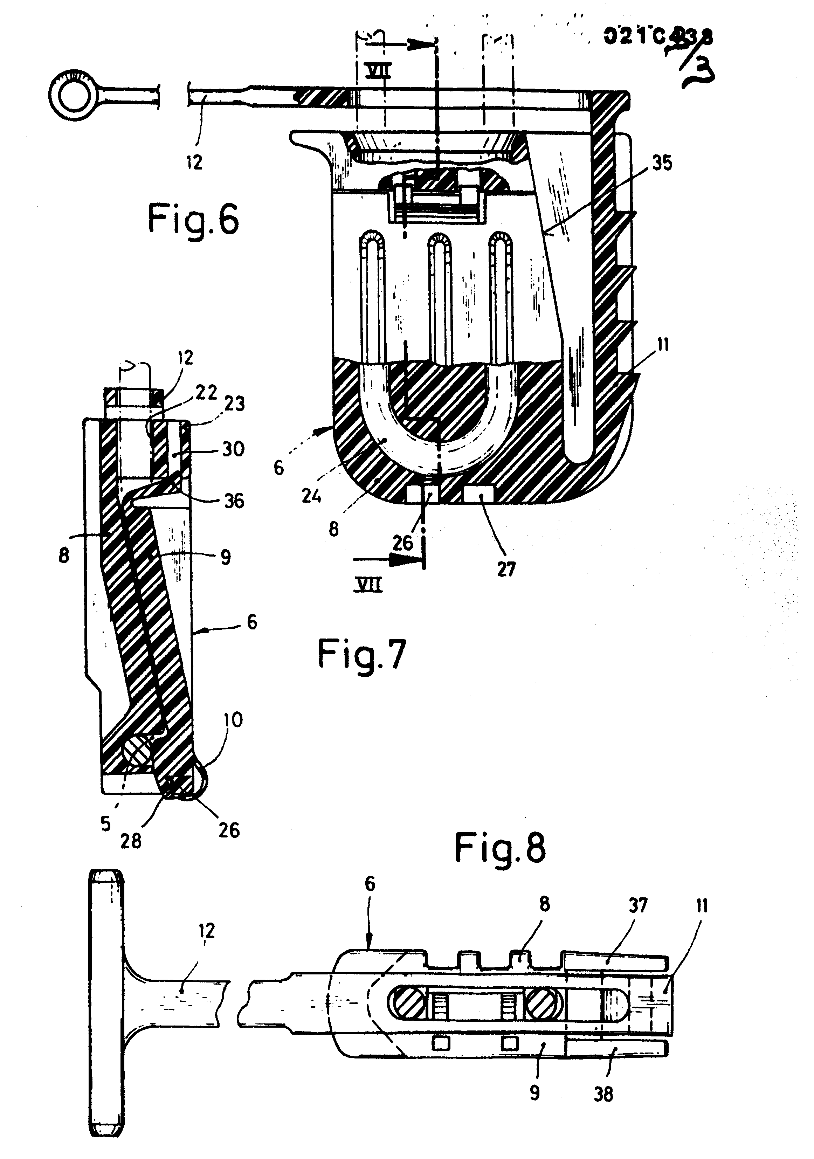

Fig. 6 eine Ansicht von der Seite auf den Rastkörper, teilweise geschnitten dargestellt,

Fig. 7 einen Längsschnitt durch den Rastkörper entlang der Linie VII - VII in Figur 7,

Fig. 8 eine Draufsicht auf den Rastkörper nach den
Figuren 7 und 8.

Die Figur 1 zeigt von einem Hintersitz eines Kraftfahrzeugs ein Sitzteil 1, welches einen Drahtrahmen 2 mit
einer aus Schaumstoff gebildeten Polsterung 3 und außenseitig einen Bezug 4 hat. Wichtig für die Erfindung ist,
daß an zumindest einer, vorzugsweise jedoch zwei Stellen
der Drahtrahmen 2 einen nach unten weisenden, U-förmigen
Abschnitt 5 aufweist, auf dem jeweils ein in Figur 2 gezeigter Rastkörper 6 zu befestigen ist. Dieser Rastkörper 6 dient zum lösbaren Verbinden des Sitzteiles 1 an

...

- 6 -

einem in Figur 3 gezeigten Fahrzeugunterbau 7.

Wie die Figur 2 erkennen läßt, besteht der Rastkörper 6 aus zwei Rastkörper-Halbschalen 8, 9, die mittels eines Filmscharniers 10 miteinander verbunden sind und im montierten Zustand des Rastkörpers 6 von beiden Seiten her über den U-förmigen Abschnitt 5 des Drahtrahmens 2 derart zu greifen vermögen, daß der Rastkörper 6 fest mit dem Drahtrahmen 2 verbunden ist. Am Rastkörper 6 ist ein Riegel 11 vorgesehen, der mittels eines an ihm befestigten Zuggliedes 12 betätigbar ist und zum Verriegeln des Rastkörpers 6 mit dem Fahrzeugunterbau 7 dient.

Der in Figur 3 teilweise dargestellte Fahrzeugunterbau 7 weist eine übliche Rampe 13 auf, auf der das Sitzteil 1 im montierten Zustand vorderseitig ruht. In dieser Rampe 13 sind zu den beiden Fahrzeugseiten hin Öffnungen 14, 15 in Form von einfachen Langlöchern vorgesehen, in die jeweils ein Rastkörper 6 zu gelangen vermag. Mit dem jeweiligen Riegel 11 verrasten die Rastkörper 6 in den Öffnungen 14, 15 mit dem Rand der Öffnungen 14, 15. Durch Ziehen an den Zuggliedern 12 kann diese Verrastung zwecks Ausbau des Sitzteiles 1 aufgehoben werden.

Die Figur 4 zeigt den Rastkörper 6 im gegenüber Figur 2 stark vergrößerten Maßstab. Zu sehen ist, daß das Zugglied 12 eine Einheit mit dem freien Ende des Riegels 11 bildet und einen Handgriff 16 hat. Der Riegel 11 hat übereinander vier Rastnasen 17, 18, 19, 20. Je nachdem, wie weit der Rastkörper 6 in die jeweilige Öffnung 14 oder 15 ragt, greift eine dieser Rastnasen 17 - 20 unter den Rand der Öffnung 14, 15 und hält dadurch den Rastkörper 6 am Fahrzeugunterbau 7 fest. Zieht man Zugglied 12, so bewegen sich die Rastnasen 17 - 20 durch die Schwenkbewegung des Riegels 11 in der Zeichnung gesehen nach links in den Rastkörper 6 hinein, so daß dieser entrastet wird.

...

Die Figur 5 läßt teilweise den inneren Aufbau der beiden Rastkörper-Halbschalen 8, 9 erkennen. Zu sehen ist, daß sowohl im Zugglied 12 als auch in einer Oberseite 23 der Rastkörper-Halbschale 8 ein länglicher Durchlaß 21, 22 vorgesehen ist. Durch diese Durchlässe 21, 22 kann der U-förmige Abschnitt 5 in die Rastkörper-Halbschale 8 eingeführt werden. Unterhalb der Oberseite 23 springt die Innenfläche der Rastkörper-Halbschale 8 plötzlich zurück und verläuft anschließend nach unten hin keilförmig nach vorne, so daß die Rastkörper-Halbschale 8 nach unten hin zunehmend dicker wird. In der Innenfläche der Rastkörper-Halbschale 8 ist eine nach oben hin offene, U-förmige Nut 24 vorgesehen, die nach unten hin infolge der keilförmigen Ausbildung der Rastkörper-Halbschale zunehmend tief in ihre Innenfläche hinein verläuft.

Am unteren Ende hat die Rastkörper-Halbschale 8 in einem Vorsprung 25 zwei Öffnungen 26, 27, welche Rastfüße 28, 29 der anderen Rastkörper-Halbschale 9 aufzunehmen vermögen. In der Oberseite 23 der Rastkörper-Halbschale 8 befinden sich zwei Rastöffnungen 30, 31, in die eine in Figur 5 nicht zu erkennende Rastzunge der Rastkörper-Halbschale 9 zu rasten vermag, wenn man die Rastkörper-Halbschalen 8, 9 nach dem Einsetzen der Rastfüße 28, 29 in die Öffnungen 26, 27 buchartig zusammenklappt.

Die in Figur 5 gesehen untere Rastkörper-Halbschale 9 wird in der dort gezeigten Lage nach unten hin dicker. In ihrer Innenfläche sind im gleichen Abstand zueinander wie die beiden Schenkel der U-förmigen Nut 24 zwei Nuten 32, 33 vorgesehen. Schiebt man den U-förmigen Abschnitt 5 von oben her durch die Durchlässe 21, 22 in die Rastkörper-Halbschale 8 ein und legt ihn in die Nut 24, dann wird er nach dem Aufeinanderklappen der Rastkörper-Halbschalen 8, 9 in den Nuten 24, 32, 33 gehalten.

...

- 8 -

Die Figuren 6, 7 und 8 zeigen den Aufbau des Rastkörpers 6 in allen wesentlichen Einzelheiten. Die Figur 6 läßt erkennen, daß es sich bei dem Riegel 11 um eine Zunge handelt, die unten an der Rastkörper-Halbschale 8 angeformt und an deren oberen Ende das Zugglied 12 befestigt ist. Der gesamte Rastkörper 6 besteht aus einem Kunststoff. Deshalb ist es leicht möglich, die den Riegel 11 bildende Zunge elastisch auszubilden, so daß sie nach einem Auslenken nach in Figur 6 gesehen links von selbst in die dort dargestellte Position zurückfedert.

Das Zugglied 12 ist am oberen, freien Ende des Riegels 11 angeformt. Eine schräg verlaufende Anschlagfläche 35 an der Rastkörper-Halbschale 8 begrenzt die beim Entrasten des Riegels 11 maximal mögliche Schwenkbewegung des Riegels 11.

In der Figur 7 ist zu erkennen, wie die Rastkörper-Halbschalen 8, 9 miteinander verrastet sind. Man sieht, daß die Rastkörper-Halbschale 9 mit einem Rastfuß 28 in der Öffnung 26 am unteren Ende der Rastkörper-Halbschale 8 steht. An ihrer Oberseite hat die Rastkörper-Halbschale 9 eine quer zur Ebene der Rastkörper-Halbschale 9 gerichtete Rastzunge 36, die in die Rastöffnung 30 der Rastkörper-Halbschale 8 eingerastet ist. Gezeigt ist in Figur 7 desweiteren der U-förmige Abschnitt 5 des Drahtrahmens 2, welcher zwischen den beiden Rastkörper-Halbschalen 8, 9 eingeklemmt ist. Weiterhin sieht man das Filmscharnier 10, mit dem die Rastkörper-Halbschalen 8, 9 miteinander verbunden sind.

Die Figur 8 läßt zusätzlich zu den bisherigen Darstellungen gut erkennen, daß der Riegel 11 seitlich von zwei Wangen 37, 38 eingefaßt ist. Diese Wangen 37, 38 bilden seitliche Ansätze an den Rastkörper-Halbschalen 8, 9 und verhindern, daß der Riegel 11 seitlich ausweichen kann.

...

- 9 -

## Patentansprüche

1. Vorrichtung zum lösbaren Verbinden eines Sitzteiles mit dem Fahrzeugaufbau, bei der am Sitzteil ein Rastkörper und am Fahrzeugaufbau ein den Rastkörper aufnehmendes Aufnahmeteil vorgesehen ist und welche ein Zugglied mit einem Handgriff zum Lösen eines den Rastkörper im Aufnahmeteil sperrenden Riegels hat, dadurch gekennzeichnet, daß der Rastkörper (6) den Riegel (11) mit dem Zugglied (12) und dem Handgriff aufweist und daß das Aufnahmeteil eine einfache Öffnung (14, 15) im Fahrzeugunterbau (7) oder Fahrzeugaufbau ist.

2. Vorrichtung nach Anspruch 1, dadurch gekennzeichnet, daß der Rastkörper (6) aus zwei aufeinandersitzenden, einen U-förmig abgebogenen Abschnitt (5) des Drahtrahmens (2) einschließenden Rastkörper-Halbschalen (8, 9) besteht.

3. Vorrichtung nach den Ansprüchen 1 oder 2, dadurch gekennzeichnet, daß in zumindest einer Rastkörper-Halbschale (8, 9) eine U-förmige, nach oben offene Nut (24) zur Aufnahme des abgebogenen Abschnittes (5) des Drahtrahmens (2) vorgesehen ist.

4. Vorrichtung nach einem oder mehreren der vorangehenden Ansprüche, dadurch gekennzeichnet, daß eine Rastkörper-Halbschale (8) an ihrer Oberseite (23) einen Durchlaß (22) zum Einschieben des U-förmigen Abschnittes (5) des Drahtrahmens (2) hat und nach unten hin zunehmend dicker wird, so daß die Nut (24) zur Basis des U's zunehmend tiefer in die Innenfläche der Rastkörper-Halbschale (8) hinein verläuft, während die andere Rastkörper-Halbschale (9) entsprechend nach unten hin keilförmig verjüngend ausgebildet ist.

. . .

5. Vorrichtung nach einem oder mehreren der vorangehenden Ansprüche, dadurch gekennzeichnet, daß die Rastkörper-Halbschalen (8, 9) durch Klipse miteinander verbunden sind.

6. Vorrichtung nach einem oder mehreren der vorangehenden Ansprüche, dadurch gekennzeichnet, daß die eine Rastkörper-Halbschale (9) mit zwei Rastfüßen (28, 29) an ihrer Unterseite in entsprechenden Öffnungen (26, 27) der anderen Rastkörper-Halbschale (8) gehalten ist und an ihrer Oberseite zumindest eine Rastzunge (36) hat, mit der sie in eine Rastöffnung (37) der anderen Rastkörper-Halbschale (8) verrastbar ist.

7. Vorrichtung nach einem oder mehreren der vorangehenden Ansprüche, dadurch gekennzeichnet, daß der Riegel (11) an der Unterseite an einer Rastkörper-Halbschale (8) als nach oben weisende federnde Zunge ausgebildet ist und an seinem freien Ende das Zugglied (12) aufweist.

8. Vorrichtung nach einem oder mehreren der vorangehenden Ansprüche, dadurch gekennzeichnet, daß am Riegel (11) in unterschiedlichen Höhen mehrere Rastnasen (17 - 20) zur Verrastung mit dem Aufnahmeteil (Öffnungen 14, 15) vorgesehen sind.

9. Vorrichtung nach einem oder mehreren der vorangehenden Ansprüche, dadurch gekennzeichnet, daß die beiden Rastkörper-Halbschalen (8, 9) jeweils mit einer Wange seitlich über den Riegel (11) greifen.

10. Vorrichtung nach einem oder mehreren der vorangehenden Ansprüche, dadurch gekennzeichnet, daß die Rastkörper-Halbschalen (8, 9) durch ein Filmscharnier (10) miteinander verbunden sind.

...

Fig.1

Fig. 2

Fig.3

1/3

0210433

**Fig. 4**

16    12    11   17   18   19   20   6

**Fig. 5**

12   16   30   31   21   22   23   8   24   25   26   27   10   28   29   9   32   33

Fig.6

Fig.7

Fig.8